# EUROPÄISCHE PATENTANMELDUNG

(11) **EP 4 752 508 A1**
(43) Veröffentlichungstag der Anmeldung: **03.06.2026**
(21) Anmeldenummer: 25213639.5
(22) Anmeldetag: 05.11.2025
(51) Int. Cl.: G01G 3/14, G01L 1/22

(54) **VERFAHREN ZUR HERSTELLUNG EINER WÄGEZELLE**

(30) Priorität: 19.11.2024 DE 102024133906
(71) Anmelder: Bizerba SE & Co. KG, 72336 Balingen (DE)
(72) Erfinder: Hauser, Alexander, 72351 Geislingen (DE)
(74) Vertreter: Manitz Finsterwald Patent- und Rechtsanwaltspartnerschaft mbB

(57) **Zusammenfassung**

Die Erfindung betrifft ein Verfahren zur Herstellung einer oder mehrerer Wägezellen, insbesondere jeweils, für eine Waage, bei dem in der angegebenen Reihenfolge die folgenden Schritte durchgeführt werden: Aufkleben von Dehnungsmesstreifen auf wenigstens einen Federkörper mittels eines Klebstoffs, Beschicken eines Wärmeschranks mit dem wenigstens einen Federkörper mit den aufgeklebten Dehnungsmesstreifen, in dem Wärmeschrank, ohne dass der wenigstens eine Federkörper mit den aufgeklebten Dehnungsmesstreifen zwischenzeitlich aus dem Wärmeschrank entnommen wird, zunächst Erzeugen eines Anpressdrucks auf die Dehnungsmesstreifen, um die Dehnungsmesstreifen gegen den wenigstens einen Federkörper zu drücken, und Ausführen einer Wärmebehandlung des Klebstoffs bei erzeugtem Anpressdruck, um den Klebstoff auszuhärten, und anschließend Reduzieren, insbesondere Wegnehmen, des Anpressdrucks auf die Dehnungsmesstreifen und Fortsetzen der Wärmebehandlung des Klebstoffs bei reduziertem, insbesondere weggenommenem, Anpressdruck, um den Klebstoff nachzuhärten, und Entnehmen des wenigstens einen Federkörpers mit den aufgeklebten Dehnungsmesstreifen mit ausgehärtetem und nachgehärtetem Klebstoff aus dem Wärmeschrank.

## Beschreibung

Die Erfindung betrifft ein Verfahren zur Herstellung einer oder mehrerer Wägezellen, insbesondere jeweils, für eine Waage, bei dem Dehnungsmesstreifen (DMS) auf wenigstens einen Federkörper mittels eines Klebstoffs aufgeklebt werden.

Bei einer Einwirkung eines Gewichts wird der Federkörper einer Wägezelle elastisch verformt. Die elastische Verformung des Federkörpers wird über auf dem Federkörper aufgebrachte Dehnungsmessstreifen, deren elektrischer Widerstand sich mit der Dehnung ändert und die üblicherweise zu einer Wheatstone-Messbrücke verschaltet sind, in eine dem einwirkenden Gewicht entsprechende elektrische Spannung umgewandelt.

Aus dem Stand der Technik ist es bekannt, zur Herstellung von derartigen Wägezellen auf einen Federkörper mehrere Dehnungsmessstreifen mittels eines Klebstoffs aufzukleben und dann mehrere Federkörper mit aufgeklebten Dehnungsmessstreifen, beispielsweise vier derartige Federkörper, gleichzeitig in eine Spannvorrichtung einzuspannen, die die Federkörper mit den Dehnungsmessstreifen von oben und unten nach Art einer Zwinge umklammert und die Dehnungsmessstreifen auf die Federkörper presst. Um den Klebstoff auszuhärten, wird die Spannvorrichtung mit den Federkörpern mit den aufgeklebten Dehnungsmessstreifen dann in einen Wärmeschrank gestellt und dort einer Wärmebehandlung unterzogen. Anschließend wird die Spannvorrichtung mit den Federkörpern mit den aufgeklebten Dehnungsmessstreifen mit ausgehärtetem Klebstoff aus dem Wärmeschrank entnommen und von den Federkörpern mit den aufgeklebten Dehnungsmessstreifen mit ausgehärtetem Klebstoff gelöst. Um mögliche Spannungen in dem Klebstoff zu vermindern und dadurch die Güte der Klebung zu verbessern, wird der Klebstoff nachgehärtet. Hierzu werden die Federkörper mit den aufgeklebten Dehnungsmessstreifen mit ausgehärtetem Klebstoff, ohne dass ein Druck auf die Dehnungsmessstreifen ausgeübt wird, nochmals in den Wärmeschrank gestellt und einer weiteren Wärmebehandlung unterzogen. Allerdings ist ein derartiges Vorgehen sowohl arbeits- als auch energieintensiv.

Der Erfindung liegt die Aufgabe zugrunde, ein Verfahren eingangs genannter Art anzugeben, das einfacher und mit weniger Aufwand durchgeführt werden kann.

Diese Aufgabe wird durch ein Verfahren mit den Merkmalen des Anspruchs 1 gelöst, und insbesondere durch ein Verfahren, bei dem in der angegebenen Reihenfolge die folgenden Schritte durchgeführt werden: Aufkleben von Dehnungsmesstreifen (DMS) auf wenigstens einen Federkörper, d.h. einen oder mehrere Federkörper, mittels eines Klebstoffs, Beschicken eines Wärmeschranks mit dem wenigstens einen Federkörper mit den aufgeklebten Dehnungsmesstreifen, in dem Wärmeschrank, ohne dass der wenigstens eine Federkörper mit den aufgeklebten Dehnungsmesstreifen zwischenzeitlich aus dem Wärmeschrank entnommen wird, zunächst Erzeugen eines Anpressdrucks auf die Dehnungsmesstreifen, um die Dehnungsmesstreifen gegen den wenigstens einen Federkörper zu drücken, und Ausführen einer Wärmebehandlung des Klebstoffs bei erzeugtem Anpressdruck, um den Klebstoff auszuhärten, und anschließend Reduzieren, insbesondere Wegnehmen, des Anpressdrucks auf die Dehnungsmesstreifen und Fortsetzen der Wärmebehandlung des Klebstoffs bei reduziertem, insbesondere weggenommenem, Anpressdruck, um den Klebstoff nachzuhärten, und Entnehmen des wenigstens einen Federkörpers mit den aufgeklebten Dehnungsmesstreifen mit ausgehärtetem und nachgehärtetem Klebstoff aus dem Wärmeschrank.

Durch den Wegfall der Handhabung des oder der Federkörper zwischen zwei voneinander getrennten Wärmebehandlungen mit zwischenzeitlichem Entladen des Wärmeschranks nach dem Aushärten des Klebstoffs, Lösen der Spannvorrichtung von den Federkörpern und erneutem Beladen des Wärmeschranks für das Nachhärten des Klebstoffs, wie es aus dem Stand der Technik bekannt ist, kann Arbeitszeit gespart werden. Darüber hinaus kann Energie gespart werden, da auch das Abkühlen des oder der Federkörper zwischen dem Aushärten und dem Nachhärten wegfällt. Im Übrigen kann auch auf die Spannvorrichtung, die regelmäßig gewartet werden muss, verzichtet werden. Für Federkörper mit unterschiedlicher Breite werden keine unterschiedlichen Spannvorrichtungen benötigt. Für Federkörper mit derselben Höhe, die unterschiedliche Spanndrücke benötigen, muss nur das Verfahren, nicht aber die Vorrichtung angepasst werden.

Es ist effizienter, wenn die in dem Wärmeschrank durchgeführten Schritte nicht nur für einen Federkörper allein, sondern für mehrere Federkörper gemeinsam durchgeführt werden. Insbesondere können mehrere Federkörper mit den aufgeklebten Dehnungsmessstreifen auf eine Tragplatte positioniert werden, wobei der Wärmeschrank mit der Tragplatte mit den mehreren Federkörpern mit den aufgeklebten Dehnungsmessstreifen beschickt und am Ende des Verfahrens die Tragplatte mit den mehreren Federkörpern mit den aufgeklebten Dehnungsmessstreifen mit ausgehärtetem und nachgehärtetem Klebstoff aus dem Wärmeschrank entnommen wird.

Es hat sich herausgestellt, dass die Güte der Klebung verbessert wird, wenn das Nachhärten bei höherer Temperatur als das Aushärten stattfindet. Es ist daher vorteilhaft, wenn der Klebstoff bei der Wärmebehandlung bei erzeugtem Anpressdruck auf eine erste Temperatur und bei der Wärmebehandlung bei reduziertem Anpressdruck auf eine zweite Temperatur, die höher ist als die erste Temperatur, aufgeheizt wird.

Gemäß einer Ausführungsform kann in dem Wärmeschrank eine Druckplatte, insbesondere eine Metallplatte, vorgesehen sein, die von oben auf den wenigstens einen Federkörper mit den aufgeklebten Dehnungsmessstreifen abgesenkt wird, um den Anpressdruck auf die Dehnungsmessstreifen zu erzeugen. Abhängig davon, wie weit die Druckplatte abgesenkt wird, kann der Anpressdruck auf die Dehnungsmessstreifen eingestellt werden. Für Federkörper mit verschiedenen Höhen kann die Metallplatte verschieden weit abgesenkt werden.

Um insbesondere geringfügige Unebenheiten auszugleichen, kann auf den wenigstens einen Federkörper mit den aufgeklebten Dehnungsmessstreifen eine elastische Matte, insbesondere aus Silikon, gelegt werden, die sich beim Absenken der Druckplatte zwischen dem wenigstens einen Federkörper mit den aufgeklebten Dehnungsmessstreifen und der Druckplatte befindet. Hierdurch kann eine homogene Druckverteilung auf die Dehnungsmessstreifen und damit eine gleichmäßige Klebstoffschicht unter den Dehnungsmessstreifen erreicht werden.

Darüber hinaus kann in dem Wärmeschrank von unten ein Unterdruck angelegt werden, um Lufteinschlüsse unter den Dehnungsmessstreifen zu entfernen, sofern Lufteinschlüsse vorhanden sein sollten. Dabei kann der Unterdruck auf die Viskosität des Klebstoffs angepasst sein. Bei niedriger Viskosität des Klebstoffs können Lufteinschlüsse zwischen den Dehnungsmessstreifen und dem oder den Federkörpern leichter abgesaugt werden. Dies ist deshalb vorteilhaft, da Lufteinschlüsse die Güte der Klebung vermindern und im ungünstigsten Fall auch zu Ausschuss führen.

Die Metallplatte kann geheizt werden, um die Wärmebehandlung auszuführen. Dies gilt sowohl für die Wärmebehandlung bei erzeugtem Anpressdruck als auch für die fortgesetzte Wärmebehandlung bei reduziertem Anpressdruck. Durch die direkte thermische Kopplung der Metallplatte an den oder die Federkörper können steilere Heizrampen als bei einer Konvektionsheizung gefahren werden.

Gemäß einer Ausführungsform kann auf den wenigstens einen Federkörper mit den aufgeklebten Dehnungsmessstreifen eine flexible Membran gelegt werden, wobei in dem Wärmeschrank von unten ein Unterdruck angelegt wird, um die flexible Membran gegen den wenigstens einen Federkörper zu drücken, um den Anpressdruck auf die Dehnungsmessstreifen zu erzeugen. Dies entspricht zumindest im Wesentlichen der Funktionsweise eines Vakuumlaminators. Abhängig von der Höhe des Unterdrucks kann der Anpressdruck auf die Dehnungsmessstreifen eingestellt werden. Darüber hinaus fällt bei dieser Ausführungsform das Entfernen der Lufteinschlüsse unter den Dehnungsmessstreifen gewissermaßen als Nebenprodukt automatisch an.

Zusätzlich oder alternativ kann in dem Wärmeschrank von oben ein Überdruck angelegt werden, um die flexible Membran gegen den wenigstens einen Federkörper zu drücken, um den Anpressdruck auf die Dehnungsmessstreifen zu erzeugen. Ein zusätzlicher Überdruck von oben ist insbesondere dann von Vorteil, wenn ein hoher Anpressdruck benötigt wird.

Es kann auch die Atmosphäre in dem Wärmeschrank aufgeheizt werden, um die Wärmebehandlung auszuführen. Dies gilt wiederum sowohl für die Wärmebehandlung bei erzeugtem Anpressdruck als auch für die fortgesetzte Wärmebehandlung bei reduziertem Anpressdruck. Eine derartige Konvektionsheizung kann besonders einfach und zuverlässig umgesetzt werden.

Darüber hinaus kann der Anpressdruck auf die Dehnungsmessstreifen und/oder bei der Wärmebehandlung bei erzeugtem Anpressdruck die Temperatur des Klebstoffs in Abhängigkeit von einer gewünschten Klebstoffschichtdicke gewählt werden. Die Klebstoffschichtdicke kann über den Anpressdruck gesteuert werden. Da die Viskosität des Klebstoffs üblicherweise stark von der Temperatur abhängt, kann auch über die Temperatur gesteuert werden, wieviel Klebstoff zwischen den Dehnungsmessstreifen und dem oder den Federkörpern verbleibt. Die Klebstoffschichtdicke ist wichtig für die wägetechnischen Eigenschaften der Wägezelle.

Außerdem kann der Anpressdruck auf die Dehnungsmessstreifen und/oder bei der Wärmebehandlung bei erzeugtem und/oder reduziertem Anpressdruck die Temperatur des Klebstoffs zeitlich variiert werden. Es können somit grundsätzlich beliebige Druck- und/oder Temperaturkurven bzw. -profile gefahren werden, um die Güte der Klebung zu optimieren. Der Anpressdruck auf die Dehnungsmessstreifen und die Temperatur des Klebstoffs können dabei unabhängig voneinander gesteuert oder geregelt werden.

Eine hohe Güte der Klebung kann erreicht werden, wenn bei der Wärmebehandlung bei erzeugtem Anpressdruck der Anpressdruck im Bereich von 5 N/cm2 bis 20 N/cm2, insbesondere 8 N/cm2 bis 15 N/cm2, liegt.

Die besten Ergebnisse für die Klebung werden erreicht, wenn für die fortgesetzte Wärmebehandlung des Klebstoffs bzw. für die Nachhärtung der Anpressdruck weggenommen, d.h. vollständig reduziert, wird. Gute Ergebnisse werden jedoch auch dann noch erreicht, wenn der reduzierte Anpressdruck zwischen 0% und 20% des Anpressdrucks, insbesondere 0% und 10% des Anpressdrucks, beträgt.

Neben dem Anpressdruck ist auch die Temperatur des Klebstoffs bei der Wärmebehandlung und die Dauer der Wärmebehandlung für eine gute Klebung wichtig. Hervorragende Ergebnisse werden erreicht, wenn bei der Wärmebehandlung bei erzeugtem Anpressdruck der Klebstoff auf eine Temperatur im Bereich von 110°C bis 140°C, insbesondere 120°C bis 130°C, erwärmt wird, und/oder die Zeitdauer der Wärmebehandlung bei erzeugtem Anpressdruck im Bereich von 2h bis 5h, insbesondere 2,5h bis 4,5h, liegt, und/oder bei der Wärmebehandlung bei reduziertem Anpressdruck der Klebstoff auf eine Temperatur im Bereich von 130°C bis 160°C, insbesondere 140°C bis 150°C, erwärmt wird, und/oder die Zeitdauer der Wärmebehandlung bei reduziertem Anpressdruck im Bereich von 2h bis 5h, insbesondere 2,5h bis 4,5h, liegt.

Weitere vorteilhafte Ausgestaltungen der Erfindung sind in den Unteransprüchen, der Figurenbeschreibung und der Zeichnung beschrieben.

Die Erfindung wird im Folgenden beispielhaft unter Bezugnahme auf die Zeichnung beschrieben. Es zeigen, in schematischer Darstellung,
- Fig. 1: eine Wägezelle,
- Fig. 2: einen nicht maßstabsgetreuen Querschnitt durch die Wägezelle gemäß Fig. 1 im Bereich eines Dehnungsmessstreifens, und
- Fig. 3: ein Ablaufdiagramm für ein erfindungsgemäßes Verfahren.

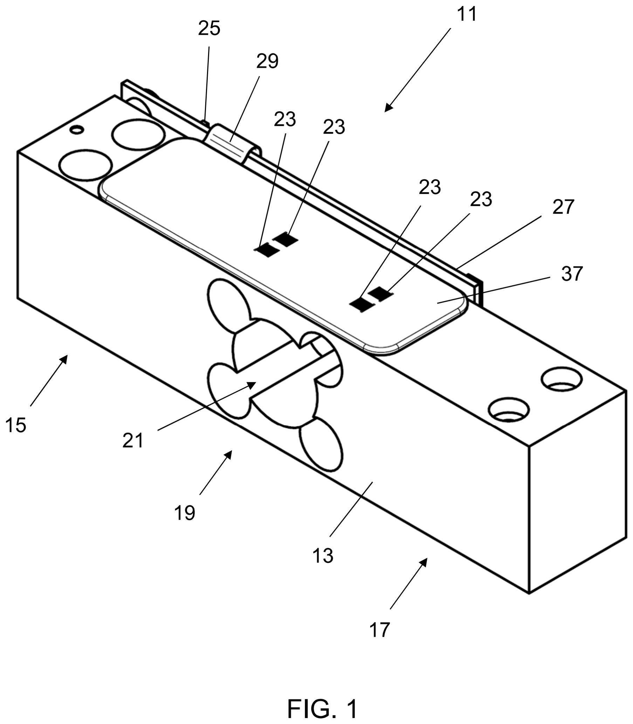

In Fig. 1 ist eine Wägezelle 11 einer ansonsten nicht dargestellten Waage mit einem Federkörper 13 gezeigt, der als Doppelbiegebalken aus z.B. Aluminium oder Edelstahl gefertigt ist. Der Federkörper 13 umfasst einen Kraftaufnahmeabschnitt 15 und einen Krafteinleitungsabschnitt 17. An dem Kraftaufnahmeabschnitt 15 ist der Federkörper 13 fest eingespannt, an dem Krafteinleitungsabschnitt 17 ist der Federkörper 13 mit einer nicht dargestellten Lastplatte verbunden. Zwischen den beiden Abschnitten 15 und 17 ist ein Verformungsabschnitt 19 vorgesehen, in dem eine Öffnung 21 ausgebildet ist, die den Federkörper 13 vollständig durchdringt. Eine Last auf dem Krafteinleitungsabschnitt 17 führt zu einer hierzu proportionalen Auslenkung bzw. Verbiegung des Federkörpers 13.

Oberhalb der Öffnung 21 sind an der Außenseite des Federkörpers 13 vier Dehnungsmessstreifen (DMS) 23 angebracht, die eine Verformung des Federkörpers 13 im Bereich des Verformungsabschnitts 19 über eine entsprechende Änderung ihres elektrischen Widerstands detektieren und die zu einer Wheatstone-Brücke verschaltet sind, so dass ein dem einwirkenden Gewicht entsprechendes Gewichtsmesssignal erzeugt werden kann. Bei der Wägezelle 11 handelt es sich daher um eine DMS-Wägezelle. Die Verschaltung der Dehnungsmessstreifen 23 als Wheatstone-Brücke sowie Anschlusspads für die Dehnungsmessstreifen 23 sind nicht dargestellt. Eine Auswerteeinheit 25, mit der das Gewichtmesssignal der Wheatstone-Brücke 23 als Brückenspannung ausgewertet wird, befindet sich auf einer Platine 27, die im Bereich des Kraftaufnahmeabschnitts 15 an der Rückseite des Federkörpers 13 angebracht ist. Die elektrische Verbindung zwischen den Dehnungsmessstreifen 23 und der Platine 27 erfolgt über ein Flachbandkabel 29.

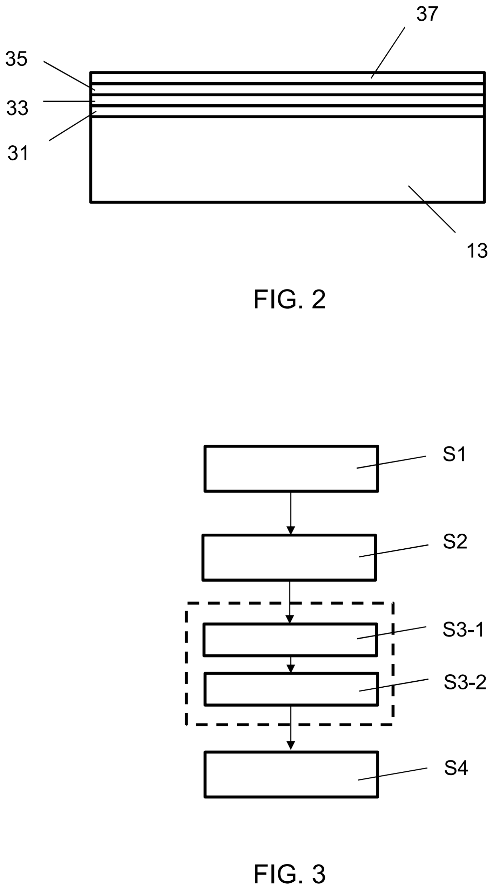

Bei den Dehnungsmessstreifen 23 handelt es sich um Folien-Dehnungsmesstreifen 23, die jeweils ein Messgitter 35 aus Widerstandsdraht aufweisen, wobei die Messgitter aller Dehnungsmessstreifen 23 auf einer gemeinsamen Trägerfolie 33 aufgebracht sind (vgl. Fig. 2). Darüber hinaus sind die Dehnungsmessstreifen 23 mit einer gemeinsamen Abdeckschicht 37, beispielsweise einer Kunststofffolie, einem Polyurethan-Lack oder einem Silikonharz, abgedeckt, um einen mechanischen Schutz der Dehnungsmessstreifen 23 zu gewährleisten. Die Trägerfolie 33 ist über Klebstoff 31 auf den Federkörper 13 aufgeklebt.

Die Wägezelle 11 wird erfindungsgemäß wie folgt hergestellt (vgl. Fig. 3), wobei die nachfolgend erläuterten Verfahrensschritte in der angegebenen Reihenfolge durchgeführt werden.

Zu Beginn des Verfahrens werden gemäß Schritt S1 die Dehnungsmessstreifen 23 auf wenigstens einen, insbesondere jeweils auf mehrere, Federkörper 13 mittels des Klebstoffs 31 aufgeklebt.

Danach wird gemäß Schritt S2 ein nicht dargestellter Wärmeschrank mit dem wenigstens einen Federkörper 13 mit den aufgeklebten Dehnungsmessstreifen 23 beschickt. Bei mehreren Federkörpern 13 kann vorgesehen sein, dass die mehreren Federkörper 13 auf eine Tragplatte positioniert werden und der Wärmeschrank mit der Tragplatte mit den mehreren Federkörpern 13 beladen wird.

In dem Wärmeschrank werden dann die beiden Schritte S3-1 und S3-2 durchgeführt (vgl. das gestrichelte Kästchen in Fig. 3), ohne dass der wenigstens eine Federkörper 13 mit den aufgeklebten Dehnungsmesstreifen 23 zwischen den beiden Schritten S3-1 und S3-2 aus dem Wärmeschrank entnommen wird.

Zunächst wird gemäß Schritt S3-1 ein Anpressdruck auf die Dehnungsmessstreifen 23 erzeugt, um die Dehnungsmessstreifen 23 gegen den wenigstens einen Federkörper 13 zu drücken, und es wird eine Wärmebehandlung des Klebstoffs 31 bei erzeugtem Anpressdruck, um den Klebstoff 31 auszuhärten, ausgeführt.

Um den Anpressdruck auf die Dehnungsmessstreifen 23 zu erzeugen, kann in dem Wärmeschrank eine Druckplatte, insbesondere eine Metallplatte, vorgesehen sein, die von oben auf den wenigstens einen Federkörper 13 mit den aufgeklebten Dehnungsmessstreifen 23 abgesenkt wird. Zwischen dem wenigstens einen Federkörper 13 mit den aufgeklebten Dehnungsmessstreifen 23 und der Druckplatte kann sich dabei eine elastische Matte, insbesondere aus Silikon, befinden, um Unebenheiten auszugleichen und eine homogene Druckverteilung auf die Dehnungsmessstreifen 23 zu erreichen. Zusätzlich zu dem durch die Druckplatte erzeugten Anpressdruck kann in dem Wärmeschrank von unten ein Unterdruck angelegt wird, um Lufteinschlüsse unter den Dehnungsmessstreifen 23 zu entfernen und damit die Güte der Klebung zu verbessern.

Alternativ kann zur Erzeugung des Anpressdrucks auf die Dehnungsmessstreifen 23 auf den wenigstens einen Federkörper 13 mit den aufgeklebten Dehnungsmesstreifen 23 eine flexible Membran gelegt und in dem Wärmeschrank von unten ein Unterdruck angelegt werden, so dass - analog zu der Funktionsweise eines Vakuumlaminators - die flexible Membran gegen den wenigstens einen Federkörper 13 gezogen wird. Es kann auch, insbesondere zusätzlich, in dem Wärmeschrank von oben ein Überdruck angelegt werden, um die flexible Membran gegen den wenigstens einen Federkörper 13 zu drücken.

Bei der Wärmebehandlung bei erzeugtem Anpressdruck liegt der Anpressdruck bevorzugt im Bereich von 5 N/cm2 bis 20 N/cm2, insbesondere 8 N/cm2 bis 15 N/cm2, der Klebstoff 31 wird bevorzugt auf eine Temperatur im Bereich von 110°C bis 140°C, insbesondere 120°C bis 130°C, erwärmt, und/oder die Zeitdauer der Wärmebehandlung bei erzeugtem Anpressdruck liegt bevorzugt im Bereich von 2h bis 5h, insbesondere 2,5h bis 4,5h.

Anschließend wird gemäß Schritt S3-2 der Anpressdruck auf die Dehnungsmessstreifen 23 reduziert, insbesondere weggenommen, und es wird die Wärmebehandlung des Klebstoffs 31 bei reduziertem, insbesondere weggenommenem, Anpressdruck fortgesetzt, um den Klebstoff 31 nachzuhärten.

Es hat sich herausgestellt, dass die Güte der Klebung höher ist, wenn der Klebstoff 31 beim Nachhärten einer höheren Temperatur unterworfen ist als beim Aushärten. Bevorzugt wird beim Nachhärten der Klebstoff 31 auf eine Temperatur im Bereich von 130°C bis 160°C, insbesondere 140°C bis 150°C, erwärmt. Die Zeitdauer der Wärmebehandlung beim Nachhärten liegt - wie die Zeitdauer beim Aushärten - bevorzugt im Bereich von 2h bis 5h, insbesondere 2,5h bis 4,5h. Im Übrigen ist es am besten, wenn beim Nachhärten der Anpressdruck weggenommen wird, d.h. vollständig reduziert wird. Allerdings können gute Ergebnisse für die Güte der Klebung auch bei einem reduzierten Anpressdruck zwischen 0% und 20% des Anpressdrucks, insbesondere 0% und 10% des Anpressdrucks, erreicht werden.

Am Ende des Verfahrens wird gemäß Schritt S4 der wenigstens eine Federkörper 13 mit den aufgeklebten Dehnungsmessstreifen 23 mit ausgehärtetem und nachgehärtetem Klebstoff 31 bzw. die Tragplatte mit den mehreren Federkörpern 13 aus dem Wärmeschrank entnommen.

Um die Wärmebehandlung bei erzeugtem Anpressdruck und/oder bei reduziertem, insbesondere weggenommenem, Anpressdruck auszuführen, kann die vorgenannte Metallplatte geheizt werden, und/oder kann die Atmosphäre in dem Wärmeschrank aufgeheizt werden. Darüber hinaus kann vorgesehen sein, dass der Anpressdruck auf die Dehnungsmessstreifen 23 in Abhängigkeit von einer gewünschten Klebstoffschichtdicke gewählt wird. Dies gilt auch für die Temperatur des Klebstoffs 31 bei der Wärmebehandlung bei erzeugtem Anpressdruck. Außerdem kann der Anpressdruck auf die Dehnungsmessstreifen 23 zeitlich variiert werden. Dies gilt auch für die Temperatur des Klebstoffs 31 bei der Wärmebehandlung bei erzeugtem und/oder reduziertem Anpressdruck.

Mit dem erfindungsgemäßen Verfahren kann die Herstellung einer Wägezelle 11 einfacher und mit weniger Aufwand durchgeführt werden.

### Bezugszeichenliste

- 11: Wägezelle
- 13: Federkörper
- 15: Kraftaufnahmeabschnitt
- 17: Krafteinleitungsabschnitt
- 19: Verformungsabschnitt
- 21: Öffnung
- 23: Dehnungsmessstreifen
- 25: Auswerteeinheit
- 27: Platine
- 29: Flachbandkabel
- 31: Klebstoff
- 33: Trägerfolie
- 35: Messgitter
- 37: Abdeckschicht

- S1: Schritt
- S2: Schritt
- S3-1: Schritt
- S3-2: Schritt
- S4: Schritt

## Patentansprüche

1. Verfahren zur Herstellung einer oder mehrerer Wägezellen (11), insbesondere jeweils, für eine Waage, bei dem in der angegebenen Reihenfolge die folgenden Schritte durchgeführt werden:
Aufkleben von Dehnungsmesstreifen (23) auf wenigstens einen Federkörper (13) mittels eines Klebstoffs (31),
Beschicken eines Wärmeschranks mit dem wenigstens einen Federkörper (13) mit den aufgeklebten Dehnungsmesstreifen (23),
in dem Wärmeschrank, ohne dass der wenigstens eine Federkörper (13) mit den aufgeklebten Dehnungsmesstreifen (23) zwischenzeitlich aus dem Wärmeschrank entnommen wird,
zunächst Erzeugen eines Anpressdrucks auf die Dehnungsmesstreifen (23), um die Dehnungsmesstreifen (23) gegen den wenigstens einen Federkörper (13) zu drücken, und Ausführen einer Wärmebehandlung des Klebstoffs (31) bei erzeugtem Anpressdruck, um den Klebstoff (31) auszuhärten, und
anschließend Reduzieren, insbesondere Wegnehmen, des Anpressdrucks auf die Dehnungsmesstreifen (23) und Fortsetzen der Wärmebehandlung des Klebstoffs (31) bei reduziertem, insbesondere weggenommenem, Anpressdruck, um den Klebstoff (31) nachzuhärten, und
Entnehmen des wenigstens einen Federkörpers (13) mit den aufgeklebten Dehnungsmesstreifen (23) mit ausgehärtetem und nachgehärtetem Klebstoff (31) aus dem Wärmeschrank.

2. Verfahren nach Anspruch 1,
**dadurch gekennzeichnet,**
**dass** mehrere Federkörper (13) mit den aufgeklebten Dehnungsmesstreifen (23) auf eine Tragplatte positioniert werden, wobei der Wärmeschrank mit der Tragplatte mit den mehreren Federkörpern (13) mit den aufgeklebten Dehnungsmesstreifen (23) beschickt und am Ende des Verfahrens die Tragplatte mit den mehreren Federkörpern (13) mit den aufgeklebten Dehnungsmesstreifen (23) mit ausgehärtetem und nachgehärtetem Klebstoff (31) aus dem Wärmeschrank entnommen wird.

3. Verfahren nach Anspruch 1 oder 2,
**dadurch gekennzeichnet,**
**dass** der Klebstoff (31) bei der Wärmebehandlung bei erzeugtem Anpressdruck auf eine erste Temperatur und bei der Wärmebehandlung bei reduziertem Anpressdruck auf eine zweite Temperatur, die höher ist als die erste Temperatur, aufgeheizt wird.

4. Verfahren nach einem der vorstehenden Ansprüche,
**dadurch gekennzeichnet,**
**dass** in dem Wärmeschrank eine Druckplatte, insbesondere eine Metallplatte, vorgesehen ist, die von oben auf den wenigstens einen Federkörper (13) mit den aufgeklebten Dehnungsmesstreifen (23) abgesenkt wird, um den Anpressdruck auf die Dehnungsmesstreifen (23) zu erzeugen.

5. Verfahren nach Anspruch 4,
**dadurch gekennzeichnet,**
**dass** auf den wenigstens einen Federkörper (13) mit den aufgeklebten Dehnungsmesstreifen (23) eine elastische Matte, insbesondere aus Silikon, gelegt wird, die sich beim Absenken der Druckplatte zwischen dem wenigstens einen Federkörper (13) mit den aufgeklebten Dehnungsmesstreifen (23) und der Druckplatte befindet.

6. Verfahren nach Anspruch 4 oder 5,
**dadurch gekennzeichnet,**
**dass** in dem Wärmeschrank von unten ein Unterdruck angelegt wird, um Lufteinschlüsse unter den Dehnungsmesstreifen (23) zu entfernen.

7. Verfahren nach einem der Ansprüche 4 bis 6,
**dadurch gekennzeichnet,**
**dass** die Metallplatte geheizt wird, um die Wärmebehandlung auszuführen.

8. Verfahren nach einem der Ansprüche 1 bis 3,
**dadurch gekennzeichnet,**
**dass** auf den wenigstens einen Federkörper (13) mit den aufgeklebten Dehnungsmesstreifen (23) eine flexible Membran gelegt wird, wobei in dem Wärmeschrank von unten ein Unterdruck angelegt wird, um die flexible Membran gegen den wenigstens einen Federkörper (13) zu drücken, um den Anpressdruck auf die Dehnungsmesstreifen (23) zu erzeugen, und/oder wobei in dem Wärmeschrank von oben ein Überdruck angelegt wird, um die flexible Membran gegen den wenigstens einen Federkörper (13) zu drücken, um den Anpressdruck auf die Dehnungsmesstreifen (23) zu erzeugen.

9. Verfahren nach einem der vorstehenden Ansprüche,
**dadurch gekennzeichnet,**
**dass** die Atmosphäre in dem Wärmeschrank aufgeheizt wird, um die Wärmebehandlung auszuführen.

10. Verfahren nach einem der vorstehenden Ansprüche,
**dadurch gekennzeichnet,**
**dass** der Anpressdruck auf die Dehnungsmesstreifen (23) und/oder bei der Wärmebehandlung bei erzeugtem Anpressdruck die Temperatur des Klebstoffs (31) in Abhängigkeit von einer gewünschten Klebstoffschichtdicke gewählt wird.

11. Verfahren nach einem der vorstehenden Ansprüche,
**dadurch gekennzeichnet,**
**dass** der Anpressdruck auf die Dehnungsmesstreifen (23) und/oder bei der Wärmebehandlung bei erzeugtem und/oder reduziertem Anpressdruck die Temperatur des Klebstoffs (31) zeitlich variiert wird.

12. Verfahren nach einem der vorstehenden Ansprüche,
**dadurch gekennzeichnet,**
**dass** bei der Wärmebehandlung bei erzeugtem Anpressdruck der Anpressdruck im Bereich von 5 N/cm2 bis 20 N/cm2, insbesondere 8 N/cm2 bis 15 N/cm2, liegt.

13. Verfahren nach einem der vorstehenden Ansprüche,
**dadurch gekennzeichnet,**
**dass** der reduzierte Anpressdruck zwischen 0% und 20% des Anpressdrucks, insbesondere 0% und 10% des Anpressdrucks, beträgt.

14. Verfahren nach einem der vorstehenden Ansprüche,
**dadurch gekennzeichnet,**
**dass** bei der Wärmebehandlung bei erzeugtem Anpressdruck der Klebstoff (31) auf eine Temperatur im Bereich von 110°C bis 140°C, insbesondere 120°C bis 130°C, erwärmt wird, und/oder die Zeitdauer der Wärmebehandlung bei erzeugtem Anpressdruck im Bereich von 2h bis 5h, insbesondere 2,5h bis 4,5h, liegt.

15. Verfahren nach einem der vorstehenden Ansprüche,
**dadurch gekennzeichnet,**
**dass** bei der Wärmebehandlung bei reduziertem Anpressdruck der Klebstoff (31) auf eine Temperatur im Bereich von 130°C bis 160°C, insbesondere 140°C bis 150°C, erwärmt wird, und/oder die Zeitdauer der Wärmebehandlung bei reduziertem Anpressdruck im Bereich von 2h bis 5h, insbesondere 2,5h bis 4,5h, liegt.
